# EUROPÄISCHE PATENTSCHRIFT

(11) **EP 2 605 943 B1**
(45) Veröffentlichungstag und Bekanntmachung des Hinweises auf die Patenterteilung: **04.03.2015**
(21) Anmeldenummer: 12743144.3
(22) Anmeldetag: 01.08.2012
(51) Int. Cl.: B60S 9/08

(54) **STÜTZVORRICHTUNG FÜR EINEN SATTELANHÄNGER, UMFASSEND EINEN SPINDELMECHANISMUS MIT MEHRTEILIGER SPINDEL, SOWIE SATTELANHÄNGER MIT EINER SOLCHEN STÜTZVORRICHTUNG**
SUPPORT DEVICE FOR A SEMITRAILER, COMPRISING A SPINDLE MECHANISM WITH MULTI-PART SPINDLE, AND SEMITRAILER HAVING A SUPPORT DEVICE OF SAID TYPE
DISPOSITIF DE SUPPORT POUR SEMI-REMORQUE, COMPRENANT UN MÉCANISME À BROCHE DOTÉ D'UNE BROCHE EN PLUSIEURS PARTIES, ET SEMI-REMORQUE COMPRENANT UN TEL DISPOSITIF DE SUPPORT

(30) Priorität: 22.08.2011 DE 102011081340
(43) Veröffentlichungstag der Anmeldung: 26.06.2013
(73) Patentinhaber: SAF-HOLLAND GmbH, 63856 Bessenbach (DE)
(72) Erfinder: WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2012/065018
(87) Internationale Veröffentlichungsnummer: WO 2013/026664

(56) Entgegenhaltungen:
- DE-U1-202006 012 472
- US-A- 2 028 999

## Beschreibung

Die Erfindung betrifft eine Stützvorrichtung für einen Sattelanhänger bzw. Sattelauflieger oder dergleichen, einen Sattelanhänger mit wenigstens einer solchen Stützvorrichtung und eine Spindel zur Verwendung in einer solchen Stützvorrichtung.

Eine Stützvorrichtung der betreffenden Art dient der Abstützung eines Sattelanhängers, wenn dieser von der Sattelzugmaschine abgekoppelt ist, wobei für die Abstützung zumeist zwei Stützvorrichtungen (Stützenpaar) an einem Sattelanhänger verwendet werden. Eine Stützvorrichtung ist z. B. aus der DE 20 2006 012 472 U1 bekannt. Die vorbekannte Stützvorrichtung weist ein Außenstützrohr und ein Innenstützrohr auf, wobei das Innenstützrohr teleskopierbar im Außenstützrohr angeordnet ist und mittels eines im Inneren (d. h. im Rohrinneren) verbauten Spindelmechanismus in axialer Richtung relativ zum Außenstützrohr bewegt werden kann. Die Betätigung des Spindelmechanismus erfolgt durch eine im Außenstützrohr angeordnete Betätigungseinrichtung, mit der eine mittels Handkurbel oder dergleichen erzeugte Drehbewegung auf eine zum Spindelmechanismus gehörende Spindel übertragen wird.

Ein Nachteil an der vorbekannten Stützvorrichtung ist die Anfälligkeit der Spindel gegen Knickung und Durchbiegung, was zu elastischen oder plastischen Verformungen führen und die Funktion des Spindelmechanismus beeinträchtigen kann.

Es ist daher eine Aufgabe der vorliegenden Erfindung, eine Stützvorrichtung der eingangs genannten Art anzugeben, die eine betriebssichere Funktionsweise gewährleistet.

Diese Aufgabe wird gelöst von einer erfindungsgemäßen Stützvorrichtung mit den Merkmalen des Anspruchs 1. Die vom Anspruch 1 abhängigen Ansprüche betreffen bevorzugte Ausgestaltungen und Weiterbildungen der erfindungsgemäßen Stützvorrichtung. Mit einem ersten nebengeordneten Anspruch erstreckt sich die Lösung der Aufgabe auch auf einen Sattelanhänger, der wenigstens eine und bevorzugt zwei erfindungsgemäße Stützvorrichtungen, die zur gemeinsamen Betätigung auch durch eine Verbindungswelle miteinander verbunden sein können, aufweist. Mit einem zweiten nebengeordneten Anspruch erstreckt sich die Lösung der Aufgabe ferner auf eine mehrteilige Spindel zur Verwendung in einer erfindungsgemäßen Stützvorrichtung. Die nachfolgenden Erläuterungen gelten analog für alle Erfindungsgegenstände.

Die erfindungsgemäße Stützvorrichtung weist ein gerades Außenstützrohr und ein gerades Innenstützrohr auf, wobei das Innenstützrohr teleskopierbar im Außenstützrohr angeordnet ist und mittels eines im Inneren verbauten Spindelmechanismus in axialer Richtung relativ zum Außenstützrohr bewegt werden kann. Es ist vorgesehen, dass der Spindelmechanismus eine mehrteilige Spindel umfasst, die mehrere in axialer Richtung (hintereinander) angeordnete und nachgiebig miteinander verbundene Segmente aufweist. Bei diesen Segmenten handelt es sich insbesondere um zylindrische Wellensegmente, wobei zwei benachbarte Wellensegmente an ihren einander zugewandten axialen Stirnseiten nachgiebig miteinander verbunden sind.

Unter einer nachgiebigen Verbindung zweier Segmente wird eine drehfeste und insbesondere drehunnachgiebige Verbindung dieser Segmente verstanden, die jedoch einen Ausgleich von Fluchtungs- und/oder Lagefehlern ermöglicht. Durch diese Ausgleichsmöglichkeit wird die mehrteilige Spindel der erfindungsgemäßen Stützvorrichtung weniger auf Knickung und Durchbiegung beansprucht, so dass die Funktion des Spindelmechanismus und dessen einfache Betätigung zuverlässig gewährleistet wird.

Vorteilhafterweise sind wenigstens zwei benachbarte Segmente derart miteinander verbunden, dass diese zueinander verschwenkbar sind. In anderen Worten ist der Winkel der Längsachsen der wenigstens zwei benachbarten Segmente veränderbar, ohne hierfür die wenigstens zwei benachbarten Segmente zu biegen.

Bevorzugt ist vorgesehen, dass wenigstens zwei benachbarte Segmente der mehrteiligen Spindel an ihren einander zugewandten axialen Stirnseiten durch eine Ausgleichskupplung nachgiebig miteinander verbunden sind. Eine solche Ausgleichskupplung kann z.B. eine Klauenkupplung, eine Kreuzscheibenkupplung, eine Membran- bzw. Ringkupplung, eine Zahnkupplung oder dergleichen sein.

Besonders bevorzugt ist vorgesehen, dass wenigstens zwei benachbarte Segmente der mehrteiligen Spindel an ihren einander zugewandten axialen Stirnseiten durch ein Wellengelenk bzw. Kardangelenk nachgiebig miteinander verbunden sind. Insbesondere ist vorgesehen, dass die mehrteilige Spindel der erfindungsgemäßen Stützvorrichtung als eine Gelenkwelle ausgebildet ist, die mehrere Segmente und mehrere diese Segmente untereinander verbindende Wellengelenke umfasst.

Das axial oberste Segment der mehrteiligen Spindel ist bevorzugt mit einer Betätigungseinrichtung zur Betätigung des Spindelmechanismus verbunden. Das axial unterste Segment der mehrteiligen Spindel ist bevorzugt mit einem Außengewinde, wie insbesondere einer Trapezgewinde, ausgebildet. Das Außengewinde kann in eine korrespondierende Spindelmutter eingreifen, die fest oder schwimmend am Innenstützrohr befestigt ist.

Zumindest eines der Segmente der mehrteiligen Spindel, insbesondere das axial unterste Segment, kann als hohles Segment bzw. rohrartiges Wellensegment ausgebildet sein. Dies kann ein einzelnes Segment oder alle Segmente betreffen. Hierdurch lässt sich in vorteilhafter Weise eine Gewichtsreduzierung erreichen. Bevorzugt ist vorgesehen, dass die hohlen Segmente an ihren einander zugewandten axialen Stirnseiten durch eine Zapfenkupplung nachgiebig miteinander verbunden sind, was bspw. durch eine Zapfenscheibe (wie nachfolgend anhand der Figuren noch näher erläutert) erfolgen kann.

Besonders bevorzugt ist ferner vorgesehen, dass im Hohlraum eines hohlen Segments, wobei es sich vorrangig um das axial unterste Segment der mehrteiligen Spindel handelt, ein Pumpmechanismus zur Ausbringung eines Schmierstoffs angeordnet ist. Dies wird nachfolgend anhand der Figuren noch ausführlicher dargelegt.

Das axial obere Segment zweckmäßigerweise ist mit einem Kegelrad einer Betätigungseinrichtung drehfest verbunden. Die Betätigungseinrichtung umfasst vorzugsweise eine Eingangswelle für eine Handkurbel und/oder einen Antriebsmotor, auf der drehfest ein Kegelrad angeordnet ist, das mit seiner Verzahnung in das Kegelrad eingreift, welches direkt oder indirekt mit der Spindel, bzw. dem axial obersten Segment, drehfest verbunden ist.

Die Erfindung wird nachfolgend anhand der Figuren beispielhaft und in nicht einschränkender Weise näher erläutert.
- Fig. 1: zeigt in einer schematischen Schnittansicht eine Stützvorrichtung gemäß dem Stand der Technik.
- Fig. 2: zeigt in einer schematischen Schnittansicht eine erfindungsgemäße Stützvorrichtung mit einer mehrteiligen Spindel in einer ersten Ausführungsform.
- Fig. 3: zeigt in einer schematischen Schnittansicht eine erfindungsgemäße Stützvorrichtung mit einer mehrteiligen Spindel in einer zweiten Ausführungsform.
- Fig. 4: zeigt in einer schematischen Schnittansicht eine erfindungsgemäße Stützvorrichtung mit einer mehrteiligen Spindel in einer dritten Ausführungsform.
- Fig. 5: zeigt in einer schematischen Schnittansicht eine besondere Ausgestaltung einer mehrteiligen Spindel mit einem integrierten Pumpmechanismus zur Ausbringung eines Schmierstoffs.

In den nachfolgenden Figuren sind gleiche und/oder funktionsgleiche Komponenten mit den selben Bezugszeichen benannt. Die in den einzelnen Figuren gezeigten Merkmale sind zugleich allgemeine Merkmale der Erfindung und können im Rahmen der Erfindung auch beliebig miteinander kombiniert werden.

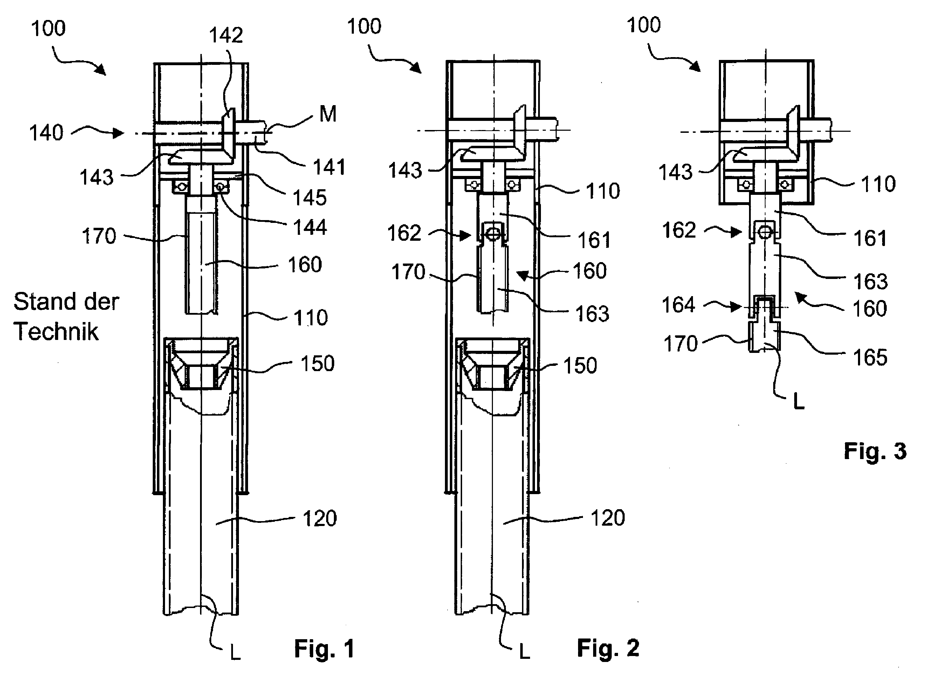

**Fig. 1** zeigt eine Stützvorrichtung 100 für einen Sattelanhänger oder dergleichen gemäß dem Stand der Technik. Die Stützvorrichtung 100 umfasst ein Außenstützrohr 110 in dem teleskopierbar bzw. längsverschieblich ein Innenstützrohr 120 angeordnet ist, das nach unten aus dem Außenstützrohr 110 herausragt. Das Außenstützrohr 110 und das Innstützrohr 120 sind beispielhaft mit einem quadratischen Querschnitt ausgebildet. Am unteren Ende des Innenstützrohrs 120 ist ein nicht dargestellter Stützfuß befestigt.

Um das Innenstützrohr 120 entlang der Längsachse L relativ zum Außenstützrohr 110 bewegen zu können, befindet sich im Inneren ein Spindelmechanismus. Zum Spindelmechanismus gehört eine Spindelmutter 150, die fest oder schwimmend am oberen axialen Ende im Innenstützrohr 120 befestigt ist. Zum Spindelmechanismus gehört ferner eine Spindel 160, die mit einem Außengewinde (bspw. einem Trapez-Bewegungsgewinde) 170 ausgebildet ist. Die Spindel 160 greift mit ihrem Außengewinde 170 in die Spindelmutter 150 ein (der Eingriff ist nicht dargestellt). In bekannter Weise kann durch Drehen der Spindel 160 (um die Längsachse L) das Innenstützrohr 120 entlang der Längsachse L relativ zum Außenstützrohr 110 bewegt werden. Abhängig von der Drehrichtung wird hierbei das Innenstützrohr 120 in das Außenstützrohr 110 eingefahren oder aus dem Außenstützrohr 110 ausgefahren. Zur Betätigung des Spindelmechanismus ist eine im Außenstützrohr 110 integrierte Betätigungseinrichtung 140 vorgesehen, an der die Spindel 160 mit ihrem oberen axialen Ende angebunden ist.

Die Betätigungseinrichtung 140 umfasst eine Eingangswelle 141 für eine Handkurbel und/oder einen Antriebsmotor. Die Längs- bzw. Drehachse M der Eingangswelle 141 erstreckt sich senkrecht zur Längs- bzw. Drehachse L der Spindel 160. Auf der Eingangswelle 141 ist drehfest ein erstes Kegelrad 142 angeordnet, das mit seiner Verzahnung in ein zweites Kegelrad 143 eingreift, wobei das zweite Kegelrad 143 direkt oder indirekt mit der Spindel 160 drehfest verbunden ist. Das erste (antreibende) Kegelrad 142 und das zweite (angetriebene) Kegelrad 143 bilden ein Kegelradgetriebe, welches eine Drehbewegung an der Eingangswelle 141 in eine Drehbewegung der Spindel 160 bzw. in eine Spindeldrehbewegung umsetzt. Zur axialen und/oder radialen Abstützung des oberen axialen Endes der Spindel 160 ist ein Wälzlager 144 vorgesehen. Mit 145 ist eine Träger- bzw. Abstützplatte bezeichnet. Die Betätigungseinrichtung 140 kann ein integriertes schaltbares mehrgängiges Übersetzungsgetriebe aufweisen (wie z. B. in der DE 20 2006 012 472 U1 beschrieben).

Fig. 2 zeigt eine mehrteilige Spindel 160 in einer ersten Ausführungsform, die in einer erfindungsgemäßen Stützvorrichtung 100 verbaut ist. Die mehrteilige Spindel 160 weist zwei in axialer Richtung L hintereinander angeordnete Segmente 161 und 163 auf. Das axial obere Segment 161 ist mit dem Kegelrad 143 der Betätigungseinrichtung 140 drehfest verbunden. Das axial untere Segment 163 weist ein Außengewinde 170 auf, das in die Spindelmutter (siehe Bezugszeichen 150 in Fig. 1) am Innenstützrohr 120 eingreift. Die Segmente 161 und 163 sind an ihren einander zugewandten axialen Stirnseiten durch ein Wellengelenk 162 nachgiebig miteinander verbunden. Das Wellengelenk 162 schafft einerseits eine drehfeste Verbindung zwischen den Segmenten 161 und 163 und ermöglicht andererseits einen geringen Winkelversatz der Segmente 161 und 163 zueinander, so dass ein Ausgleich von Lagefehlern ermöglicht wird. Somit kann die mehrteilige Spindel 160 in gewohnter Weise eine Drehbewegung um die Längsachse L ausüben, wird jedoch im Vergleich zu einer einteiligen Spindel wesentlich geringer auf Durchbiegung oder -knickung belastet, wie obenstehend erläutert. Bei der Anordnung von drei oder mehr Segmenten 161, 163, 165 ist ein besonders optimaler Ausgleich nicht nur von Lage- bzw. Winkelfehlern sonder auch von Fluchtungs- bzw. Versatzfehlern zur Längsachse L möglich.

**Fig. 3** zeigt eine mehrteilige Spindel 160 in einer zweiten Ausführungsform, die in einer erfindungsgemäßen Stützvorrichtung 100 verbaut ist. Das Außenstützrohr 110 ist nur teilweise und das Innenstützrohr ist nicht dargestellt (diesbezüglich wird auf die Fig. 1 und 2 verwiesen). Die mehrteilige Spindel 160 ist als Gelenkwelle ausgebildet und weist drei in axialer Richtung L hintereinander angeordnete Segmente 161, 163 und 165 auf, die mittels zwei Wellengelenken 162 und 164 miteinander verbunden sind. Die Bolzen der Wellengelenke 162 und 164 - und somit deren Schwenkachsen - sind um 90° zueinander versetzt. Das axial unterste Segment 165 ist mit einem Außengewinde 170 ausgebildet, das in die Spindelmutter am Innenstützrohr eingreift. Im Übrigen gelten analog die vorausgehenden Erläuterungen.

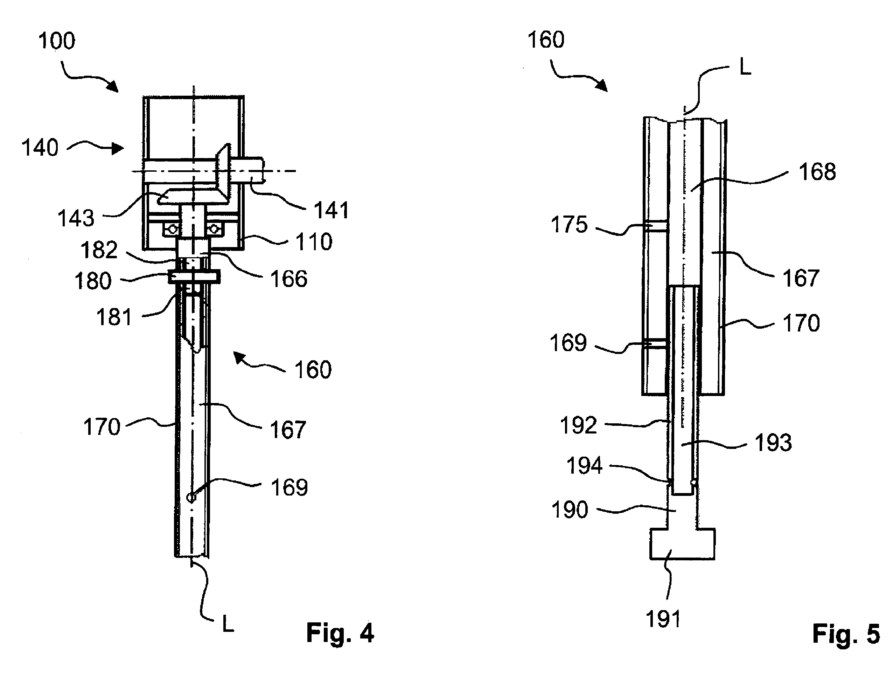

**Fig. 4** zeigt eine mehrteilige Spindel 160 in einer dritten Ausführungsform, die in einer erfindungsgemäßen Stützvorrichtung 100 verbaut ist. Das Außenstützrohr 110 ist nur teilweise und das Innenstützrohr ist nicht dargestellt (diesbezüglich wird auf die Fig. 1 und 2 verwiesen). Die mehrteilige Spindel 160 weist zwei in axialer Richtung L hintereinander angeordnete Segmente 166 und 167 auf, die als hohle Segmente ausgebildet sind. Die Segmente 166 und 167 sind an ihren einander zugewandten axialen Stirnseiten durch eine als Zapfenscheibe 180 ausgebildete Zapfenkupplung nachgiebig miteinander verbunden. Die Zapfenscheibe 180 weist zwei sich axial gegenüberliegende Zapfen 181 und 182 auf, die formschlüssig in die Hohlräume der Segmente 166 und 167 eingreifen. Die Arretierung kann z. B. durch Verbindungselemente (bspw. mit einem Sicherungsstift) erfolgen. Bedingt kommen auch ein Schrumpfsitz, eine Verpressung und/oder eine Verschweißung in Betracht. Im Übrigen gelten analog die vorausgehenden Erläuterungen.

**Fig. 5** zeigt eine besondere Ausgestaltung eines hohlen Segments, wobei es sich beispielhaft um das untere axiale Segment 167 der in Fig. 4 gezeigten Spindel 160 handelt. Im Hohlraum 168 des Segments 167 ist ein einfacher Pumpmechanismus zur Ausbringung eines Schmierstoffs angeordnet. Zum Pumpmechanismus gehört ein Schmierrohr 190. Das Schmierrohr 190 weist einen Kolbenabschnitt 192 auf, der axial- und relativbeweglich im Hohlraum 168 des Segments 167 gelagert ist. Mit seinem unteren Endabschnitt 191 ist das Schmierrohr 190 fest am Innenstützrohr (siehe Bezugszeichen 120 in Fig. 1 oder 2) oder auch am Stützfuß befestigt.

Beim Ausfahren und Einfahren des Innenstützrohrs kommt es zu einer Relativbewegung zwischen dem Kolbenabschnitt 192 und dem Segment 167 der Spindel 160, woraus ein Pumpeffekt resultiert. Beim Einfahren des Kolbenabschnitts 192 wird zunächst die Belüftungsbohrung 175 in der Wandung des Segments 167 verschlossen. Die im Hohlraum 168 eingeschlossene Luft wird beim weiteren axialen Einfahren des Kolbenabschnitts 192 komprimiert, wodurch sich ein Innendruck aufbaut. Gelangt die Schmieröffnung 194 im unteren Wandungsbereich des Kolbenabschnitts 192 in Überdeckung mit der Schmierbohrung 169 in der Wandung des Segments 167 wird aufgrund des gegebenen Innendrucks ein im Schmierstoffreservoir 193 befindlicher Schmierstoff portioniert nach außen gedrückt und verteilt sich in der Folge auf dem umliegenden Außengewinde 170. Der Schmierstoff, wobei es sich insbesondere um ein Schmierfett handelt, gelangt somit in einfacher Weise in jene Bereiche, die besonders geschmiert werden müssen. Dadurch kann gezielt mit wenig aber hochwertigem Schmierstoff geschmiert werden. Der Pumpmechanismus kann auch anders aufgebaut sein.

## Patentansprüche

1. Stützvorrichtung (100) für einen Sattelanhänger oder dergleichen, umfassend ein Außenstützrohr (110) und ein Innenstützrohr (120),
wobei das Innenstützrohr (120) teleskopierbar im Außenstützrohr (110) angeordnet ist und mittels eines im Inneren verbauten Spindelmechanismus in axialer Richtung (L) relativ zum Außenstützrohr (110) verlagert werden kann, und **dadurch gekennzeichnet, dass**
der Spindelmechanismus eine mehrteilige Spindel (160) aufweist, die mehrere in axialer Richtung (L) angeordnete und nachgiebig miteinander verbundene Segmente (161, 163, 165; 166, 167) aufweist.

2. Stützvorrichtung (100) nach Anspruch 1, wobei wenigstens zwei benachbarte Segmente (161, 163; 163, 165) derart miteinander verbunden sind, dass diese zueinander verschwenkbar sind.

3. Stützvorrichtung (100) nach einem der vorhergehenden Ansprüche, wobei wenigstens zwei benachbarte Segmente (161, 163; 163, 165) an ihren einander zugewandten axialen Stirnseiten durch eine Ausgleichskupplung, vorzugsweise ein Wellengelenk (162; 164), nachgiebig miteinander verbunden sind.

4. Stützvorrichtung (100) nach Anspruch 3, wobei die mehrteilige Spindel (160) als eine Gelenkwelle ausgebildet ist, die mehrere Segmente (161, 163, 165) und mehrere diese Segmente untereinander verbindende Wellengelenke (162, 164) umfasst.

5. Stützvorrichtung (100) nach einem der vorhergehenden Ansprüche, wobei das axial unterste Segment (163; 165; 167) der mehrteiligen Spindel (160) mit einem Außengewinde (170) ausgebildet ist.

6. Stützvorrichtung (100) nach einem der vorhergehenden Ansprüche, wobei zumindest eines der Segmente (166, 167) der mehrteiligen Spindel (160) als hohles Segment ausgebildet ist.

7. Stützvorrichtung (100) nach Anspruch 6, wobei zumindest zwei hohle Segmente (166, 167) an ihren einander zugewandten axialen Stirnseiten durch eine Zapfenkupplung (180) nachgiebig miteinander verbunden sind.

8. Stützvorrichtung (100) nach Anspruch 6 oder 7, wobei im Hohlraum (168) eines hohlen Segments (167) ein Pumpmechanismus zur Ausbringung eines Schmierstoffs angeordnet ist.

9. Stützvorrichtung (100) nach einem der vorhergehenden Ansprüche, weiterhin aufweisend eine Betätigungseinrichtung (140) mit einem Kegelradgetriebe, welches eine Drehbewegung an der Eingangswelle (141) der Betätigungseinrichtung (140) in eine Drehbewegung der Spindel (160) umsetzt.

10. Stützvorrichtung (100) nach Anspruch 9, wobei ein axial oberes Segment (161) der Spindel (160) mit einem Kegelrad (143) der Betätigungseinrichtung (140) drehfest verbunden ist.

11. Sattelanhänger, umfassend wenigstens eine Stützvorrichtung (100) gemäß einem der vorhergehenden Ansprüche 1 bis 10.

## Claims

1. A support device (100) for a semi-trailer or the like, comprising an outer support tube (110) and an inner support tube (120),
wherein the inner support tube (120) is arranged in telescopic fashion in the outer support tube (110) and can be moved in the axial direction (L) relative to the outer support tube (110) by means of a spindle mechanism installed in the interior, and **characterized in that**
the spindle mechanism comprises a multi-part spindle (160) which has a plurality of segments (161, 163, 165; 166, 167) arranged in the axial direction (L) and connected to one another in a flexible manner.

2. The support device (100) of claim 1, wherein at least two adjacent segments (161, 163; 163, 165) are connected to one another such that they can be pivoted relative to each other.

3. The support device (100) of any one of the preceding claims, wherein at least two adjacent segments (161, 163; 163, 165) at their axial front ends which face each other are connected to one another in a flexible manner by means of a self-aligning coupling, preferably a universal joint (162; 164).

4. The support device (100) of claim 3, wherein the multi-part spindle (160) is designed as a Cardan shaft comprising a plurality of segments (161, 163, 165) and a plurality of universal joints (162, 164) connecting said segments to one another.

5. The support device (100) of any one of the preceding claims, wherein the axially bottommost segment (163; 165; 167) of the multi-part spindle (160) is designed with an outer thread (170).

6. The support device (100) of any one of the preceding claims, wherein at least one of said segments (166, 167) of the multi-part spindle (160) is designed as a hollow segment.

7. The support device (100) of claim 6, wherein at least two hollow segments (166, 167) are connected to one another in a flexible manner at their axial front ends which face each other by means of a pin coupling (180).

8. The support device (100) of claim 6 or 7, wherein in the hollow space (168) of a hollow segment (167) there is arranged a pump mechanism for outputting a lubricant.

9. The support device (100) of any one of the preceding claims, further comprising an actuating mechanism (140) with a bevel gearing which transforms a rotational movement on the input shaft (141) of the actuating mechanism (140) into a rotational movement of the spindle (160).

10. The support device (100) of claim 9, wherein an axial upper segment (161) of the spindle (160) is connected to a bevel gear or bevel pinion (143) of the actuating mechanism (140) in a torque-proof manner.

11. A semi-trailer, comprising at least one support device (100) according to any one of the preceding claims 1 to 10.

## Revendications

1. Dispositif de support (100) pour une remorque de semi-remorque ou similaire, comprenant un tube support extérieur (110) et un tube support intérieur (120),
dans lequel le tube support intérieur (120) est agencé de manière télescopique dans le tube support extérieur (110) et peut être déplacé en direction axiale (L) par rapport au tube support extérieur (110) au moyen d'un mécanisme à broche intégré à l'intérieur,
**caractérisé en ce que**
le mécanisme à broche comprend une broche en plusieurs parties (160), qui comprend plusieurs segments (161, 163, 165 ; 166, 167) agencés en direction axiale (L) et reliés les uns aux autres de manière flexible.

2. Dispositif de support (100) selon la revendication 1, dans lequel au moins deux segments voisins (161, 163 ; 163, 165) sont reliés les uns aux autres de telle façon que ceux-ci sont capables de pivoter les uns par rapport aux autres.

3. Dispositif de support (100) selon l'une des revendications précédentes, dans lequel au moins deux segments voisins (161, 163 ; 163, 165) sont reliés l'un à l'autre de manière flexible au niveau de leurs côtés frontaux axiaux tournés l'un vers l'autre par un accouplement de compensation, de préférence une articulation d'arbre (162 ; 164).

4. Dispositif de support (100) selon la revendication 3, dans lequel la broche en plusieurs parties (160) est réalisée comme un arbre articulé, qui comprend plusieurs segments (161, 163, 165) et plusieurs articulations d'arbre (162, 164) qui relient les segments les uns aux autres.

5. Dispositif de support (100) selon l'une des revendications précédentes, dans lequel le segment situé axialement le plus en bas (163 ; 165 ; 167) de la broche en plusieurs parties (160) est réalisé avec un filetage extérieur (170).

6. Dispositif de support (100) selon l'une des revendications précédentes, dans lequel l'un au moins des segments (166, 167) de la broche en plusieurs parties (160) est réalisé comme un segment creux.

7. Dispositif de support (100) selon la revendication 6, dans lequel au moins deux segments creux (166, 167) sont reliés de manière flexible l'un à l'autre par un accouplement à tourillon (180) au niveau de leurs côtés frontaux axiaux tournés l'un vers l'autre.

8. Dispositif de support (100) selon la revendication 6 ou 7, dans lequel un mécanisme à pompe pour déposer un lubrifiant est agencé dans l'espace creux (168) d'un segment creux (167).

9. Dispositif de support (100) selon l'une des revendications précédentes, comprenant en outre un moyen d'actionnement (140) avec un mécanisme à engrenages coniques, qui convertit un mouvement de rotation sur l'arbre d'entrée (141) du moyen d'actionnement (140) en un mouvement de rotation de la broche (160).

10. Dispositif de support (100) selon la revendication 9, dans lequel un segment supérieur axial (161) de la broche (160) est relié solidairement en rotation à un engrenage conique (143) du moyen d'actionnement (140).

11. Remorque de semi-remorque, comprenant au moins un dispositif de support (100) selon l'une des revendications précédentes 1 à 10.
